(19) Europäisches Patentamt
European Patent Office
Office européen des brevets

(11) Publication number: 0 014 508
B1

(12) # EUROPEAN PATENT SPECIFICATION

(45) Date of publication of patent specification: **08.06.83**

(51) Int. Cl.³: **C 08 F 14/06**, C 08 F 2/44

(21) Application number: **80200087.7**

(22) Date of filing: **31.01.80**

(54) **Process for the preparation of colour stabilised vinyl chloride polymers.**

(30) Priority: **09.02.79 GB 7904660**

(43) Date of publication of application:
**20.08.80 Bulletin 80/17**

(45) Publication of the grant of the patent:
**08.06.83 Bulletin 83/23**

(84) Designated Contracting States:
**BE DE FR GB IT NL**

(56) References cited:
**GB - A - 1 084 578**
**GB - A - 1 511 621**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Heemskerk, Johannes**
**Badhuisweg 3**
**NL-1031 CM Amsterdam (NL)**
Inventor: **Onderwater, Martinus Adrianus G.**
**Badhuisweg 3**
**NL-1031 CM Amsterdam (NL)**

(74) Representative: **Puister, Antonius Tonnis, Mr. et al,**
**P.O. Box 302**
**NL-2501 CH The Hague (NL)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

EP 0 014 508 B1

# Process for the preparation of colour stabilised vinyl chloride polymers

This invention relates to a process for the production of a colour stabilised polymer of vinyl chloride containing as stabilizer an aromatic beta diketone of the formula

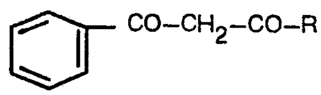
(I)

wherein R represents an alkyl or aryl group optionally substituted by a carboxyl group, or an alkylene group linked with another 3-phenyl-1,3-oxopropyl moiety, and from 0.001 to 5%, by weight of the polymer, of one or more divalent metal carboxylates, the polymer being a polymer prepared by aqueous suspension polymerisation.

In general, vinyl chloride polymers have poor thermal/colour stability. This is reflected in decomposition, discolouration and brittleness of the polymer when it is subjected to elevated temperatures through shaping operations, for example, through injection moulding, extrusion and bottle blowing machines. It is well known that certain organic salts of zinc and calcium (such as their stearates) are effective thermal stabilisers which result in a good initial colour and brightness in the shaped material. These properties are important, for example, in the production of bottles from a polymer having a relatively low K-value and good flow. However, the use of zinc and calcium organic salts as stabilisers does not always enable the most stringent commercial criteria to be met, particularly in processes such as bottle manufacture where it is customary to reprocess any bottles whose moulding is unsatisfactory. Such reprocessing procedures thereby impose a repeated thermal stress on the recycled material and thus require an improved level of stabilisation. For technical and economic reasons, it is naturally desirable for any stabiliser to be utilised in the smallest proportion which will achieve the desired commercial result. Also it is often convenient for the stabiliser to be added during the actual polymerisation, since the subsequent processing is thereby simplified by the reduction in the number and complexity of the additives to be incorporated. However, the suspension system used in the polymerisation of vinyl chloride falls for a precise balance of conditions, which can often be affected adversely by the presence of additional components, and hence it is often found impractical to incorporate the stabiliser during polymerisation.

U.K. Patent Specification 1511621 discloses compositions based on polymers or copolymers of vinyl chloride, which contain the following compounds, expressed by weight relative to the weight of the polymers:

a) 0.1 to 5% of one of more divalent metal salts of carboxylic acids, conventionally employed for stabilising such polymers, and

b) 0.05 to 5% of an organic compound of the general formula:

$$R_1—CO—CHR_2—CO—R_3 \qquad (I)$$

in which $R_1$ represents:

a linear or branched alkyl or alkenyl radical having up to 30 carbon atoms, an aralkyl radical having 7 to 36 carbon atoms or an aryl or cycloaliphatic radical having less than 14 carbon atoms, it being possible for the cycloaliphatic radicals optionally to contain carbon-carbon double bonds, $R_3$ represents a radical as defined under $R_1$ and may be identical or different from $R_1$ or represents a hydrogen atom, provided that, in $R_1$ and $R_3$, the carbon atoms adjacent the indicated carbonyl groups are not doubly bonded to carbon or oxygen and that not more than one of said carbon atoms is contained in an aromatic ring; $R_2$ represents: a hydrogen atom, an alkyl or alkenyl radical which has up to 30 carbon atoms, and optionally contains

—O—, 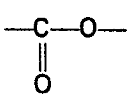 and —CO—

linkages, a radical of the formula: $—CO—R_4$ wherein $R_4$ represents an alkyl radical having 1 to 30 carbon atoms or an aryl radical if $R_1$ and $R_3$ are not aromatic, or a radical of the formula:

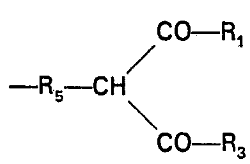

wherein $R_5$ represents an alkylene radical having 1 to 6 carbon atoms.

The radicals $R_1$ and $R_3$ may optionally be substituted, for example by halogen atoms or by aryl or cycloaliphatic radicals, or by methyl or ethyl radicals; they can also be modified by the presence of one or more

—O—, 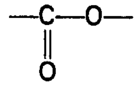 and —CO—

linkages within the aliphatic chain; they can together represent a divalent alkylene radical with 2 to 5 carbon atoms, optionally containing an oxygen or nitrogen atom. By incorporation of from 0.05 to 5% by weight of dibenzoyl methane or stearoyl benzyl methane an acceptable stabilisation of polyvinyl chloride was obtained. According to this patent specification the stabiliser may be incorporated at the same time as the other additives, such as plasticisers, pigments and lubricants, either simultaneously or sequentially, suitable blending methods being through homogenisation in a mixer or kneader.

U.K. Patent Specification 1084578 discloses that an acceptable stabilisation of polyvinyl chloride can be obtained by the incorporation of from 0.1% to 5% by weight of dibenzoyl methane or stearoyl benzoyl methane. This specification gives no details in the descriptive part on the procedures employed for the actual incorporation of the stabiliser into the polymer; in all the examples according to this reference the stabiliser is incorporated after the polymerisation. Thus the teaching of these documents is that stabilisation of PVC using diketones requires the PVC to be homogenised with at least 0.05%, by weight, of stabiliser. However, the Applicants have now surprisingly found that aromatic beta diketone stabilisers may not only be incorporated during the polymerisation of the vinyl chloride monomer, but moreover their incorporation at this stage permits the attainment of satisfactory stability with significantly lower proportions of stabiliser.

Accordingly, the present invention provides a process for the production of a colour stabilised polymer of vinyl chloride containing as stabilizer an aromatic beta diketone of the formula

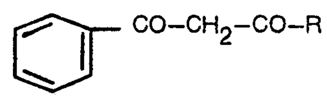 (I)

wherein R represents an alkyl or aryl group optionally substituted by a carboxyl group, or an alkylene group linked with another 3-phenyl-1,3-oxopropyl moiety, and from 0.001 to 5%, by weight of the polymer, of one or more divalent metal carboxylates, the polymer being a polymer prepared by aqueous suspension polymerisation, characterised in that, the aromatic beta diketone is incorporated into the polymer by effecting the suspension polymerisation in the presence of from 0.005 to 0.04%, by weight of the vinyl chloride, of said aromatic beta diketone and that the carboxylate is incorporated in the polymer by blending the polymer with added carboxylate.

Preferred stabilisers are compounds of formula I wherein R represents a long chain alkyl group of up to 30 carbon atoms, for example stearyl; a short chain alkyl substituted by carboxyl, for example 4-carboxy butyl; a phenyl or carboxyphenyl group; or a short chain alkylene group, such as tetramethylene, linked with another 3-phenyl-1,3-oxopropyl moiety. Particularly preferred individual compounds include dibenzoyl methane, stearoyl benzoyl methane and dibenzoyl adipoyl methane (1,10 diphenyl 1,3,8,10 decanetetraone), which are desirably present in an amount between 0.025—0.04% by weight of the vinyl chloride.

The stabiliser may be introduced as a separate component or may be introduced in solution or suspension in one of the other initial reactants. Although it can be added during the polymerisation if operational conditions so require, it is preferred to introduce it at the earliest practicable stage, and thus it is normally present at the start of the polymerisation.

The vinyl polymer is preferably obtained by homopolymerisation of a vinyl chloride monomer, although copolymers may also be used for example with vinylidene chloride, vinyl acetate or methyl acrylate.

In the suspension system used in the polymerisation the weight ratio of monomer(s) plus polymer to water is usually in excess of 0.2 and is preferably between 0.4 and 0.8.

The suspension is stabilised by incorporation of polyvinyl alcohol which is usually added to the aqueous phase in an amount of 0.0001 to 5% by weight, preferably in an amount of 0.001 to 0.2% by weight, based on the weight of the suspension system, i.e. on the weight of water, monomer(s) and polymer, if present. The polyvinyl alcohol used normally has a degree of hydrolysis of 50—100%, and a molecular weight such that a 4% solution in water at room temperature has a viscosity of 1—100 centipoises (mPas). In addition to polyvinyl alcohol, other suspension stabilisers may be used, such as, for example, alkylaryl sulphonates and methyl cellulose.

The suspension polymerisation of vinyl chloride is carried out under the influence of a radical initiator such as azobisisobutyronitrile, percarbonates, dibenzoyl peroxide, dicaproyl peroxide, dilauroyl peroxide, ditertiary butyl peroxide, acetylcyclohexane sulphonyl peroxide or combinations of these peroxides. The peroxides are used in amounts varying from 0.0005—2% by weight, preferably 0.02—0.3% by weight, based on the monomer. The pH is preferably maintained between 8 and 4.

The suspension system may also contain other substances such as chain transfer agents, e.g.

dodecyl mercaptan, thioethanol or a copolymer of ethylene and vinyl acetate and sodium tripolyphosphate, in amounts of up to approximately 5% by weight, based on the monomer(s).

The polymerisation is normally carried out at temperatures between 45°C and 80°C. The pressure in the polymerisation reactor may vary from 5 to 20 atm. The K-value of the polymer may be controlled by varying the polymerisation temperature and pressure, appropriate temperatures being between 60°C and 75°C.

The divalent metal carboxylate blended with the polyvinyl chloride is suitably a zinc or calcium salt of a long chain aliphatic acid, such as octanoic or stearic acid, although carboxylates of barium and cadmium are also effective, and is preferably employed in an amount of 0.01 to 1% by weight, based on the polymer.

Stabilisers, plasticisers, pigments, lubricants, and the like may be added to the resultant polymer, either to the suspension, or preferably to the dried polymer. In addition, it is often useful to add an epoxy compound such as an epoxidised unsaturated oil.

The invention is illustrated in the following Examples.

## Example I

A number of vinyl chloride polymerisations were carried out using the following reactants at the indicated parts by weight.

| | |
|---|---|
| Water | 167 |
| Vinyl chloride | 100 |
| Polyvinyl alcohol | 0.17 (degree of hydrolysis 70—80%; degree of polymerisation 500—1500) |
| Dilauryl peroxide | 0.070 |
| Sodium dihydrogen phosphate | 0.10 |

In each case except one (control), stearoyl benzoyl methane (SBM) was also present in the reactor charge in an amount selected to demonstrate the results achieved using from 0.001 to 0.04%, by weight of vinyl chloride monomer.

The reactants were charged into a closed reactor fitted with a reflux condenser, and polymerisation was carried out at a temperature of 72°C and pressure of 15 Atm. for a period of about 6 hours to achieve a monomer to polymer conversion of about 80%. The resulting polymer was then worked up into a formulation having the following composition:—

| | |
|---|---|
| Polyvinyl chloride | 100 parts by weight |
| Epoxidised soybean oil | 5.0 parts by weight |
| Acrylic impact improver | 10.0 parts by weight |
| Calcium/zinc octoate stabiliser | 0.2 parts by weight |

A 1 mm thick sheet of this compound was produced by milling, and the colour of the resultant sheet was assessed visually in comparison with the control. The results of that assessment are recorded on a qualitative scale in which the control is rated as 0, and the experimental samples awarded a varying number of '+' indicative of their improved colour relative to the control. Thus the greater number of '+' indications the better the product colour. The results of these evaluations are set out in Table 1.

Table 1

| SBM wt. % on vinyl chloride | | Colour rating |
|---|---|---|
| 0 | (control) | 0 |
| 0.001 | | 0/+ |
| 0.005 | | + |
| 0.010 | | ++ |
| 0.025 | | 3+ |
| 0.040 | | 4+ |

A polymerisation carried out in a commercial plant in the presence of 0.010 wt. % SBM confirmed the colour rating of the product as ++ under commercial conditions. For the purposes of comparison, the above experimental procedure was repated without including SBM in the polymerisation reaction mixture (i.e. the control was repeated), but 0.010 wt. % of SBM was blended into the vinyl chloride polymer during its subsequent processing. The colour rating of that material was only "0/+" in comparison with the "++" achieved when the same amount of SBM was present during polymerisation, thereby demonstrating the greatly improved results achieved by the present invention.

Example II

A number of vinyl chloride polymerisations were carried out, and the polymer worked up into thin sheet and assessed for colour, following the recipes and procedures described in Example I, except that the stearoyl benzoyl methane stabiliser was replaced by a different acyl acetophenone stabiliser. In each case the stabiliser was incorporated into the reactor charge in an amount of 0.01% by weight of the vinyl chloride monomer. The results of these studies are set out in Table 2 below.

Table 2

| Stabiliser | Colour Rating |
|---|---|
| 4-(3′-phenyl-1′,3′-oxopropyl)benzoic acid | + |
| 8-phenyl-6,8 oxo octanoic acid | ++ |
| Dibenzoyl adipoyl methane | 5+ |
| Dibenzoyl methane | 5+ |

**Claims**

1. Process for the production of a colour stabilised polymer of vinyl chloride containing as stabilizer an aromatic beta diketone of the formula

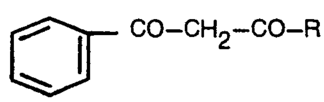

(I)

wherein R represents an alkyl or aryl group optionally substituted by a carboxyl group, or an alkylene group linked with another 3-phenyl-1,3- oxopropyl moiety, and from 0.001 to 5%, by weight of the polymer, of one or more divalent metal carboxylates, the polymer being a polymer prepared by aqueous suspension polymerisation, characterised in that, the aromatic beta diketone is incorporated into the polymer by effecting the suspension polymerisation in the presence of from 0.005 to 0.04%, by weight of the vinyl chloride, of said aromatic beta diketone and that the carboxylate is incorporated in the polymer by blending the polymer with added carboxylate.

2. Process as claimed in claim 1 characterised in that R represents a long chain alkyl group of up to 30 carbon atoms, a short chain alkyl group substituted by carboxyl, a phenyl or carboxyphenyl group, or a short chain alkylene group linked with another 3-phenyl-1,3-oxopropyl moiety.

3. Process as claimed in claim 1 or 2 characterised in that the aromatic beta diketone stabiliser is dibenzoyl methane, stearoyl benzoyl methane, or dibenzoyl adipoyl methane.

4. Process as claimed in any one of the preceding claims characterised in that the aromatic beta diketone stabiliser is present in an amount between 0.025 and 0.04% by weight of the vinyl chloride.

5. Process as claimed in any one of the preceding claims characterised in that the aromatic beta diketone stabiliser is present at the start of the polymerisation.

**Patentansprüche**

1. Verfahren zur Herstellung eines farbstabilisierten Polymers aus Vinylchlorid, enthaltend als Stabilisator ein aromatisches $\beta$-Diketon der Formel

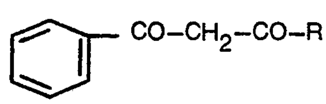

(I)

in der R eine Alkyl-oder Arylgruppe bedeutet, die gegebenenfalls durch eine Carboxylgruppe substituiert ist oder eine Alkylengruppe, die mit einer anderen 3-Phenyl-1,3-oxopropylgruppe verbunden ist, und 0,001 bis 5 Gew.-%, bezogen auf das Polymer, eines oder mehrerer zweiwertiger Metallcarboxylate,

wobei das Polymer ein solches ist, das hergestellt worden ist durch Polymerisation in wässriger Suspension, dadurch gekennzeichnet, daß das aromatische $\beta$-Diketon in das Polymer eingebaut wird, indem man die Suspensionspolymerisation in Gegenwart von 0,005 bis 0,4 Gew.-%, bezogen auf das Vinylchlorid, des aromatischen $\beta$-Diketons durchführt, und daß das Carboxylat in das Polymer eingebaut wird durch Vermischen des Polymers mit dem zugesetzten Carboxylat.

2. Verfahren nach Anspruch 1, dadurch gekennzeichnet, daß R eine langkettige Alkylgruppe mit bis zu 30 Kohlenstoffatomen, eine kurzkettige Alkylgruppe, die durch eine Carboxylgruppe substituiert ist, eine Phenyl- oder Carboxyphenylgruppe oder eine kurzkettige Alkylengruppe, die mit einer anderen 3-Phenyl-1,3-oxypropylgruppe verbunden ist, bedeutet.

3. Verfahren nach Anspruch 1 oder 2, dadurch gekennzeichnet, daß der aromatische $\beta$-Diketon-Stabilisator Dibenzoylmethan, Stearoylbenzoylmethan oder Dibenzoyladipoylmethan ist.

4. Verfahren nach einem der vorangehenden Ansprüche, dadurch gekennzeichnet, daß der aromatische $\beta$-Diketon-Stabilisator in einer Menge zwischen 0,025 und 0,04 Gew.-%, bezogen auf das Vinylchlorid, vorhanden ist.

5. Verfahren nach einem der vorangehenden Ansprüche, dadurch gekennzeichnet, daß der aromatische $\beta$-Diketon-Stabilisator zu Beginn der Polymerisation vorhanden ist.

**Revendications**

1. Procédé pour la production d'un polymère de chlorure de vinyle stabilisé en couleur contenant comme stabilisant une bêta-dicétone aromatique de la formule

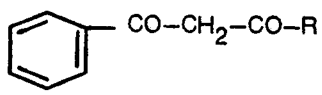

(I)

dans laquelle R représente un groupe alcoyle ou aryle éventuellement substitué par un groupe carboxyle, ou un groupe alcoylène lié à une autre portion 3-phényl-1,3-oxopropyle, et de 0,001 à 5% en poids, par rapport au polymère, d'un ou plusieurs carboxylates de métaux divalents, le polymère étant un polymère préparé par polymérisation en suspension aqueuse, caractérisé en ce qu'on incorpore la bêta-dicétone aromatique dans le polymère en effectuant la polymérisation en suspension en présence de 0,005 à 0,04% en poids de la bêta-dicétone aromatique, par rapport au chlorure de vinyle, et en ce qu'on incorpore le carboxylate dans le polymère en mélangeant le polymère avec du carboxylate ajouté.

2. Procédé selon la revendication 1, caractérisé en ce que R représente un groupe alcoyle à chaîne longue ayant jusqu'à 30 atomes de carbone, un groupe alcoyle à chaîne courte substitué par un groupe carboxyle, un groupe phényle ou carboxyphényle ou un groupe alcoylène à chaîne courte lié à une autre portion 3-phényl-1,3-oxopropyle.

3. Procédé selon la revendication 1 ou 2, caractérisé en ce que le stabilisant bêta-dicétone aromatique est du dibenzoyl méthane, du stéaroyl benzoyl méthane ou du dibenzoyl adipoyl méthane.

4. Procédé selon l'une quelconque des revendications précédentes, caractérisé en ce que le stabilisant bêta-dicétone aromatique est présent à raison d'une quantité comprise entre 0,025 et 0,04% en poids par rapport au chlorure de vinyle.

5. Procédé selon l'une quelconque des revendications précédentes, caractérisé en ce que le stabilisant bêta-dicétone aromatique est présent au début de la polymérisation.